# EUROPÄISCHE PATENTANMELDUNG

(11) **EP 1 365 175 A2**
(43) Veröffentlichungstag der Anmeldung: **26.11.2003**
(21) Anmeldenummer: 03010985.4
(22) Anmeldetag: 16.05.2003
(51) Int. Cl.: F16H 55/18

(54) **Zahnradsatz für ein Getriebe**

(30) Priorität: 24.05.2002 DE 10223259; 27.03.2003 DE 10313992
(71) Anmelder: STERKI AG, 8633 Wolfhausen (CH)
(72) Erfinder: Sterki, Arnold, 8633 Wolfhausen (CH)
(74) Vertreter: Weiss, Peter, Dr. rer. nat.

(57) **Zusammenfassung**

Bei einem Zahnradsatz für ein Getriebe, insbesondere für ein Getriebe mit einem PTO (Power-Take-Off) -Zusatz, wobei zumindest zwei Zahnräder (1- 4) aneinander liegen, sollen die Zahnräder (1 - 4) relativ zueinander verdrehbar sein.

## Beschreibung

Die Erfindung betrifft einen Zahnradsatz für ein Getriebe, insbesondere für ein Getriebe mit einem PTO (Power-Take-OFF) -Zusatz, wobei zumindest zwei Zahnräder aneinander liegen.

### Stand der Technik

Derartige PTO-Einrichtungen werden häufig in Lastkraftwagen benutzt, bei denen hydraulische Vorrichtungen betrieben werden müssen, die einen erheblichen Kraftaufwand benötigen. Die PTO's werden bspw. an ein Getriebe angesetzt und dann in Tätigkeit gesetzt, wenn bspw. eine hydraulische Pumpe angetrieben werden soll. Verwiesen wird hier insbesondere auf die US 5,542,306 in der sich mehrere Ausführungen zur PTO-Einrichtungen finden.

Wesentlicher Bestandteil eines PTO's sind zwei Zahnräder, welche eine Drehbewegung aus einem Getriebe auf bspw. eine Drehwelle einer Pumpe übersetzen. Zu diesem Zweck greifen die Zahnräder in entsprechende Zahnungen des Getriebes bzw. der Pumpenwelle ein. Verständlicherweise gibt es dabei häufig auch ein Spiel in den Eingriffen, insbesondere bei kritischen Drehzahlen von ungefähr 500 bis 600 U/min, wobei es zu einer erheblichen Geräuschentwicklung kommt. Gleichzeitig ist damit auch ein höherer Verschleiss der Zahnräder verbunden.

### Aufgabe

Der vorliegenden Erfindung liegt die Aufgabe zu Grunde, einen Zahnradsatz der o.g. Art zu entwickeln, mit dem ein Spiel so ausgeglichen wird, dass es nicht zu den Geräuschentwicklungen kommt.

### Lösung der Aufgabe

Zur Lösung dieser Aufgabe führt, dass die Zahnräder relativ zueinander verdrehbar sind.

Das bedeutet, dass einem Übertragungs-Zahnrad bevorzugt ein Ausgleichsrad zugeordnet wird, wobei sich beide gegeneinander in Drehrichtung über einen Kraftspeicher abstützten. Ausgleichsrad und Übertragungs-Zahnrad haben den selben Durchmesser und bevorzugt die selbe Zahnung. Ausser Eingriffen mit einem dritten Getrieberad stimmen die Zahnungen beider Räder nicht überein. Greift jedoch ein drittes Getrieberad in beide Zahnung gleichzeitig ein, so wird das Ausgleichsrad gegen die Kraft des Kraftspeichers gedreht und in etwa in Übereinstimmung mit der Zahnung des Übertragungs-Zahnrades gebracht. Wenn dann bspw. bei einer relativ niedrigen Drehzahl ein Spiel zwischen dem dritten Getrieberad und dem Übertragungs-Zahnrad bzw. Ausgleichsrad entsteht, so wird dieses Spiel durch das Ausgleichsrad aufgehoben. Die Zahnung des Ausgleichsrades liegt immer an der Zahnung des dritte Getrieberades an, so dass eine Geräuschentwicklung vermieden wird.

Die Kraftspeicher können einfache Schraubenfedern sein. Je nach dem, wie diese Schraubenfedern in entsprechenden Ausnehmungen bzw. Bohrungen angeordnet sind, kann es bei höheren Drehzahlen zu einem Auslenken der Schraubenfedern durch entsprechende Fliehkräfte kommen. Um diesem entgegenzuwirken und damit ein Verbiegen der Schraubenfedern zu vermeiden, sind in sie Schraubenfederbolzen eingesetzt, welche jedoch kürzer als die Schraubenfedern sind. Entsprechend der Fliehkraft wandern diese Bolzen im Inneren der Schraubenfeder ebenfalls nach aussen, so dass sie sich gerade in dem Bereich der Schraubenfeder befinden, der einem möglichen Verbiegen unterliegt.

Bei einem anderen Ausführungsbeispiel handelt es sich bei dem Kraftspeicher um ein elastisches, deformierbares Element, welches in einer entsprechenden Ausnehmung zwischen Übertragungs-Zahnrad und Ausgleichsrad angeordnet ist. Bevorzugt und der Einfachheit halber wird eine dicke Gummischeibe verwendet, die in einer entsprechenden dosenförmigen Ausnehmung sitzt. Dieses elastische Element nimmt in hervorragender Weise die auf beide Zahnräder einwirkenden Drehkräfte auf und kompensiert diese.

In einem bevorzugten Ausführungsbeispiel ist dem Übertragungs-Zahnrad noch eine Nabe angeformt, auf der auch das Ausgleichsrad aufsitzt. In diesem Fall steht für die Anordnung von Kraftspeicher relativ wenig Raum zur Verfügung, so dass diese bevorzugt schräg bzw. tangential angeordnet sind. Dabei ist in die Nabe ein Sackloch oder eine Bohrung eingeformt, in welche die Schraubenfeder eingesteckt wird. Sie stützt sich andererseits in einer Tasche ab, welche in einen Innenring des Ausgleichsrades eingeformt ist.

In der Regel dürfte der Zahnradsatz noch ein weiteres Paar von Übertragungs-Zahnrad und Ausgleichsrad besitzen. Da dieses einen grösseren Durchmesser aufweist, als das erstgenannte Paar, bietet es sich hier an, die entsprechenden Kraftspeicher zwischen Ausgleichsrad und Übertragungs-Zahnrad vorzusehen und zwar in den jeweils aneinander liegenden Flächen. Die Lage dieser Kraftspeicher dürfte dann in etwa in Drehrichtung verlaufen.

Sollte es sich bei dem Kraftspeicher um eine Schraubenfeder handeln, so genügt es, wenn sowohl in das Ausgleichsrad als auch in das Übertragungs-Zahnrad jeweils die Hälfte einer Mulde eingeformt ist. Die beiden Hälften bilden dann zusammen die Ausnehmung, welche die Schraubenfeder aufnimmt. Beidends können in der Ausnehmung noch Stützblöcke vorgesehen sein, gegen welche sich die Schraubenfeder abstützt.

Bevorzugt kann das zweite Paar von Ausgleichsrad und Übertragungs-Zahnrad ebenfalls auf die Nabe aufgesetzt sein. Dabei liegen die beide Ausgleichsräder aneinander.

Der erfindungsgemässe Radsatz vermeidet nicht nur die oben erwähnte Geräuschentwicklung bei bestimmten Drehzahlen, sondern gewährleistet auch einen geringeren Verschleiss. Ferner ist es auf einfacher Art und Weise möglich, bereits bestehende Radsätze aus zwei Übertragungs-Zahnrädern durch den erfindungsgemässen Radsatz aus zwei Paaren von Übertragungs-Zahnrädern und Ausgleichsrädern zu ersetzen.

### Figurenbeschreibung

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
- Figur 1: eine Draufsicht auf einen erfindungsgemässen Zahnradsatz;
- Figur 2: einen Schnitt durch den Zahnradsatz gemäss Figur 1, teilweise entlang Linie A-A, teilweise entlang Linie B-B;
- Figur 3: eine Draufsicht auf ein Ausgleichsrad;
- Figur 4: einen Schnitt durch das Ausgleichsrad entlang Linie IV-IV in Figur 3;
- Figur 5: eine Draufsicht auf ein Übertragungs-Zahnrad;
- Figur 6: einen Querschnitt durch das Übertragungs-Zahnrad gemäss Figur 5 entlang Linie VI-VI;
- Figur 7: einen teilweise dargestellten Querschnitt durch ein weiteres Ausführungsbeispiel einer Kombination von Übertragungs-Zahnrad und Ausgleichsrad;
- Figur 8: eine Draufsicht auf das hälftig dargestellte Übertragungs-Zahnrad gemäss Figur 7.

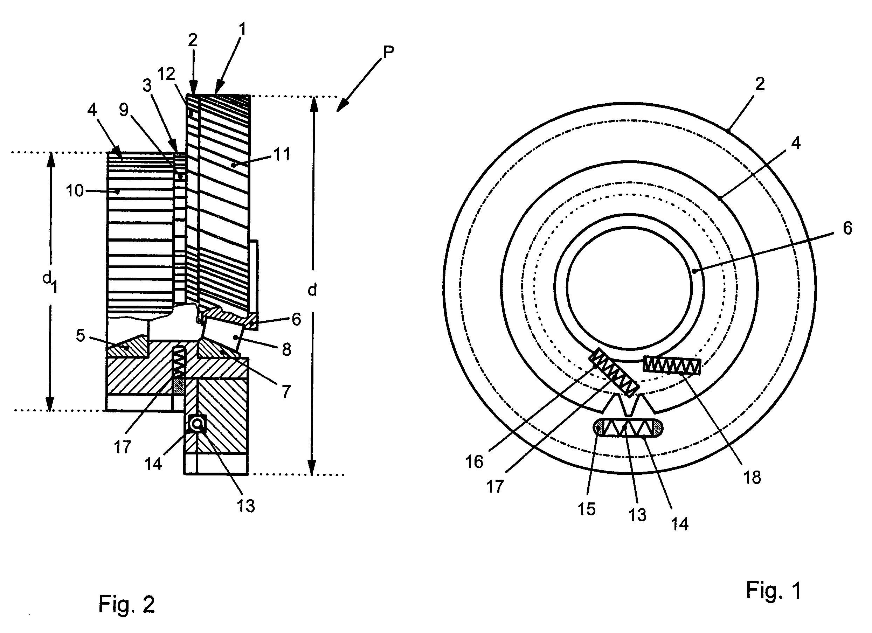

Ein erfindungsgemässer Zahnradsatz P weist gemäss Figur 2 ein Übertragungs-Zahnrad 1 auf, dem ein Ausgleichsrad 2 zugeordnet ist. Beide Räder 1 und 2 haben einen Durchmesser d. Dieser Durchmesser d ist viel grösser als ein Durchmesser d₁ von einem weiteren Ausgleichsrad 3 und einem weiteren Übertragungs-Zahnrad 4.

In dem Übertragungs-Zahnrad 4 befindet sich ein Lager, von dem lediglich die Lagerschale 5 angedeutet ist. Von dem Übertragungs-Zahnrad 4 ragt eine Nabe 6 ab, auf welche die Ausgleichsräder 2 und 3 und das Übertragungs-Zahnrad 1 aufgesetzt sind. In der Nabe 6 befindet sich eine weitere Lagerschale 7 für ein Wälzlager 8.

Das Ausgleichsrad 3 besitzt eine gleiche Zahnung 9 wie eine Zahnung 10 des Übertragungs-Zahnrades 4. Ebenso besitzt das Übertragungs-Zahnrad 1 eine gleiche Zahnung 11 wie die Zahnung 12 des Ausgleichsrades 2.

Erfindungsgemäss ist das Ausgleichsrad 3 gegenüber dem Übertragungs-Zahnrad 4 drehbar, ebenso das Ausgleichsrad 2 gegenüber dem Übertragungs-Zahnrad 1. Bei der jeweiligen Drehung können die Zahnungen 9 und 10 bzw. 11 und 12 in Übereinstimmung gebracht werden.

Einer Drehung der Ausgleichsräder 2 bzw. 3 gegenüber ihren Übertragungs-Zahnrädern 1 und 4 wirken Kraftspeicher entgegen. Zwischen dem Übertragungs-Zahnrad 1 und seinem Ausgleichsrad 2 ist nur ein Kraftspeicher, der als Schraubenfeder 13 ausgebildet ist, angedeutet, wobei sich diese Schraubenfeder 13 in einer Ausnehmung 14 befindet, die gemäss Figur 2 je zur Hälfte von einer entsprechenden Einformung in einer Oberfläche des Ausgleichsrades 2 und einer Oberfläche des Übertragungs-Zahnrades 1 gebildet wird. Zur besseren Abstützung befindet sich in der Ausnehmung 14 endseitig jeweils ein Stützblock 15.

Zwischen Übertragungs-Zahnrad 4 und Ausgleichsrad 3 sind mehrere, aus Platzgründen tangential verlaufende Bohrung 16 vorgesehen, welche der Aufnahme von ebenfalls tangential verlaufenden Schraubenfedern 17 dienen.

In diesen Schraubenfedern 17 befinden sich Bolzen 18, die kürzer als die Schraubenfedern 17 sind.

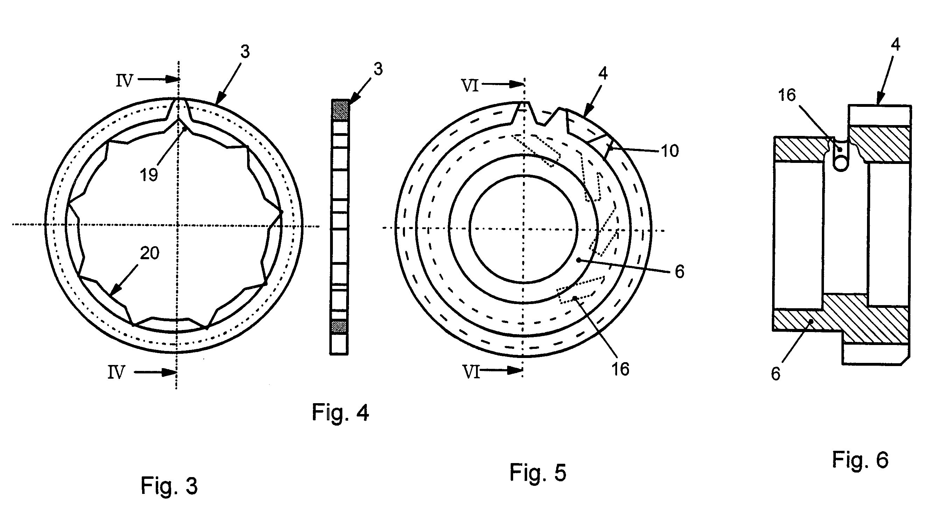

Gemäss Figur 6 ist erkennbar, dass sich die Bohrungen 16 angrenzend an das Übertagungs-Zahnrad 4 in den Nabenteil 6 erstrecken. Anderenends stützen sich die Schraubenfedern 16 in Taschen 19 in einem Innenring 20 des Ausgleichsrades 3 (siehe Figur 3) ab.

Die Funktionsweise der vorliegenden Erfindung ist folgenden:

Jedes Getriebe, aber insbesondere die PTO-Getriebe, besitzen eine kritische Drehzahl, bei der es infolge des Spiels zwischen den Zahnrädern, die miteinander kämmen, zu erheblichen Geräuschentwicklungen kommen kann. Diese Geräuschentwicklung wird durch den vorliegenden Zahnradsatz unterbunden, da die Ausgleichsräder 2 und 3 das jeweilige Spiel ausgleichen.

Zahnräder, die mit dem erfindungsgemässen Zahnradsatz zusammenwirken, greifen jeweils sowohl in die Zahnung 9 des Ausgleichsrades 3 als auch in die Zahnung 10 des Übertragungs-Zahnrades 4 ein, ebenso in die Zahnung 11 des Übertragungs-Zahnrades 1 und die Zahnung 12 des Ausgleichsrades 2. Ausserhalb dieses Eingriffs befinden sich die jeweiligen Räder in der in Figur 2 gezeigten Ausgangslage, in welcher die Zahnungen 9 und 10 bzw. 11 und 12 nicht übereinstimmen. Durch das Einsetzten der oben erwähnten Zahnräder in diese Zahnungen werden jedoch die entsprechenden Zahnungen 9 und 10 bzw. 11 und 12, soweit möglich, in Übereinstimmung gebracht. Dies geschieht gegen die Kraft der Kraftspeicher 17 bzw. 13. Sollte während eines kritischen Drehzahlverhältnisses ein Spiel zwischen den Übertragungsrädern 1 bzw. 4 und entsprechenden weiteren Zahnrädern auftreten, so wird dieses Spiel durch die Ausgleichsräder 2 und 3 ausgeglichen.

Die oben erwähnten Bolzen 18 haben den erheblichen Vorteil, das sie einem Verbiegen der Federn bei einer hohen Drehzahl entgegenwirken. Hierdurch wird der Verschleiss vermindert.

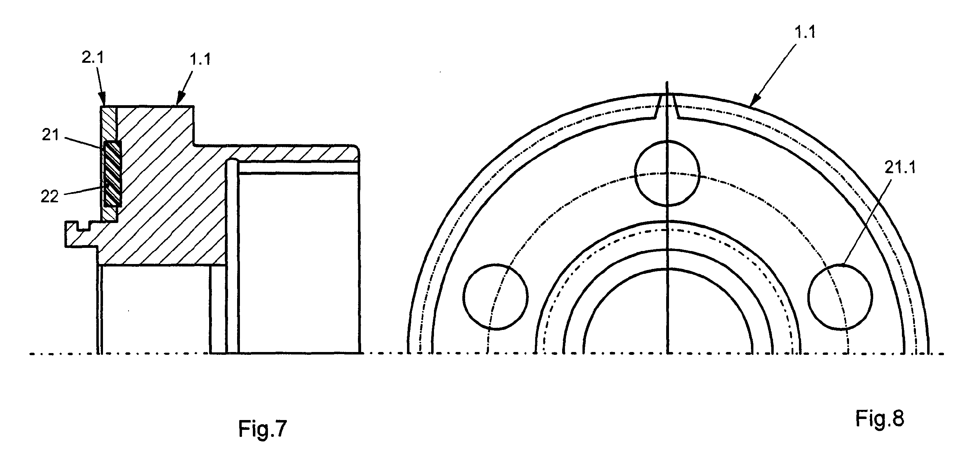

In einem weiteren Ausführungsbeispiel der Erfindung befinden sich gemäss den Figuren 7 und 8 zwischen einem Übertragungs-Zahnrad 1.1 und einem Ausgleichsrad 2.1 eine Mehrzahl von dosenartigen Ausnehmungen 21, wobei jede Ausnehmung 21 etwa hälftig von dem Übertragungs-Zahnrad 1.1 und dem Ausgleichsrad 2.1 gebildet wird. Die Hälfte, welche das Übertragungs-Zahnrad 1.1 ausbildet, ist in Figur 8 mit 21.1 gekennzeichnet.

In der Ausnehmung 21 sitzt ein elastisches Element, insbesondere eine Gummischeibe 22.

### Positionszahlenliste

| | | | | | |
|---|---|---|---|---|---|
| 1 | Übertragungs-Zahnrad | 34 | | 67 | |
| 2 | Ausgleichsrad | 35 | | 68 | |
| 3 | Ausgleichsrad | 36 | | 69 | |
| 4 | Übertragungs-Zahnrad | 37 | | 70 | |
| 5 | Lagerschale | 38 | | 71 | |
| 6 | Nabe | 39 | | 72 | |
| 7 | Lagerschale | 40 | | 73 | |
| 8 | Wälzlager | 41 | | 74 | |
| 9 | Zahnung | 42 | | 75 | |
| 10 | Zahnung | 43 | | 76 | |
| 11 | Zahnung | 44 | | 77 | |
| 12 | Zahnung | 45 | | 78 | |
| 13 | Schraubenfeder | 46 | | 79 | |
| 14 | Ausnehmung | 47 | | | |
| 15 | Stützblock | 48 | | | |
| 16 | Bohrung | 49 | | | |
| 17 | Schraubenfeder | 50 | | d | Durchmesser |
| 18 | Bolzen | 51 | | d₁ | Durchmesser |
| 19 | Tasche | 52 | | | |
| 20 | Innenring | 53 | | | |
| 21 | Ausnehmung | 54 | | | |
| 22 | Gummischeibe | 55 | | | |
| 23 | | 56 | | | |
| 24 | | 57 | | P | Zahnradsatz |
| 25 | | 58 | | | |
| 26 | | 59 | | | |
| 27 | | 60 | | | |
| 28 | | 61 | | | |
| 29 | | 62 | | | |
| 30 | | 63 | | | |
| 31 | | 64 | | | |
| 32 | | 65 | | | |
| 33 | | 66 | | | |

## Patentansprüche

1. Zahnradsatz für ein Getriebe, insbesondere für ein Getriebe mit einem PTO (Power-Take-Off) Zusatz, wobei zumindest zwei Zahnräder (1 - 4) aneinander liegen
**dadurch gekennzeichnet,**
**dass** die Zahnräder (1 - 4) relativ zueinander verdrehbar sind.

2. Zahnradsatz nach Anspruch 1, **dadurch gekennzeichnet, dass** die Zahnräder (1 - 4) sich über zumindest einen Kraftspeicher (13, 17, 22) gegeneinander abstützen.

3. Zahnradsatz nach Anspruch 1 oder 2, **dadurch gekennzeichnet, dass** einem Übertragungs-Zahnrad (1, 4) ein Ausgleichsrad (2, 3) zugeordnet ist.

4. Zahnradsatz nach Anspruch 3, **dadurch gekennzeichnet, dass** das Ausgleichsrad (2, 3) die gleiche Zahnung (9, 12) aufweist, wie das Übertragungs-Zahnrad (1, 4).

5. Zahnradsatz nach Anspruch 3 oder 4, **dadurch gekennzeichnet, dass** sich der Kraftspeicher (13, 17, 22) zwischen Ausgleichsrad (2, 3) und Übertragungs-Zahnrad (1, 4) befindet.

6. Zahnradsatz nach wenigstens einem der Ansprüche 2 - 5, **dadurch gekennzeichnet, dass** die Kraftspeicher (17) in tangentialen Bohrungen (16) angeordnet sind.

7. Zahnradsatz nach Anspruch 6, **dadurch gekennzeichnet, dass** sich die Bohrungen teilweise in eine dem Übertragungs-Zahnrad (4) angeformte Nabe (6) erstrecken, auf der auch das Ausgleichsrad (3) aufsitzt.

8. Zahnradsatz nach Anspruch 7, **dadurch gekennzeichnet, dass** in einem Innenring (20) des Ausgleichsrades (3) zur Aufnahme der Kraftspeicher (17) Taschen (19) eingeformt sind.

9. Zahnradsatz nach wenigstens einem der Ansprüche 2 - 8, **dadurch gekennzeichnet, dass** die Kraftspeicher (13) in einer Ausnehmung (14) zwischen Ausgleichsrad (2) und Übertragungs-Zahnrad (1) ausgeordnet sind.

10. Zahnradsatz nach Anspruch 9, **dadurch gekennzeichnet, dass** die Ausnehmung (14) je etwa zur Hälfte in das Ausgleichsrad (2) und das Übertragungs-Zahnrad (1) eingeformt ist.

11. Zahnradsatz nach Anspruch 9 oder 10, **dadurch gekennzeichnet, dass** in die Ausnehmung (19) beidends Stützblöcke (15) für die Kraftspeicher (13) eingesetzt sind.

12. Zahnradsatz nach wenigstens einem der Ansprüche 2 - 11, **dadurch gekennzeichnet, dass** die Kraftspeicher Schraubenfedern (13, 17, 22) sind.

13. Zahnradsatz nach Anspruch 12, **dadurch gekennzeichnet, dass** in den Schraubenfedern (13, 17) Bolzen (18) aufgenommen sind, welche kürzer als die Schraubenfedern (13, 17) sind.

14. Zahnradsatz nach wenigstens einem der Ansprüche 2 - 5, **dadurch gekennzeichnet, dass** der Kraftspeicher ein elastisches, deformierbares Element (22) ist, welches in Ausnehmungen (21) zwischen Ausgleichsrad (2.1 und/oder 3) und Übertragungs-Zahnrad (1.1 und/oder 4) sitzt.

15. Zahnradsatz nach Anspruch 14, **dadurch gekennzeichnet, dass** das elastische Element eine Gummischeibe (22) ist, welche in einer dosenartigen Ausnehmung (21) sitzt.

16. Zahnradsatz nach wenigstens einem der Ansprüche 7 - 15, **dadurch gekennzeichnet, dass** das zweite Ausgleichsrad (2) und Übertragungs-Zahnrad (1) ebenfalls auf der Nabe aufsitzen.

17. Zahnradsatz nach Anspruch 16, **dadurch gekennzeichnet, dass** die beiden Ausgleichsräder (2, 3) aneinander liegen.

18. Zahnradsatz nach Anspruch 16 oder 17, **dadurch gekennzeichnet, dass** die zweiten Ausgleichs- und Übertragungs-Zahnräder (1, 2) einen grösseren Durchmesser (d) als die ersten (3, 4) aufweisen.
